# EUROPEAN PATENT APPLICATION

(11) **EP 4 654 672 A1**
(43) Date of publication of application: **26.11.2025**
(21) Application number: 25155588.4
(22) Date of filing: 03.02.2025
(51) Int. Cl.: H04W 48/16, H04W 36/00, H04W 52/02, H04W 76/27

(54) **RELAXED MEASUREMENT ENHANCEMENT IN A WIRELESS COMMUNICATION SYSTEM**

(30) Priority: 21.05.2024 IN 202441039666
(71) Applicant: Samsung Electronics Co., Ltd., Suwon-si, Gyeonggi-do 16677 (KR)
(72) Inventor: ATLA, Ravindra Reddy, 560048 Bengaluru (IN); SURESHSAH THIRUMALLI, Ramkumar, 560048 Bengaluru (IN); MALLIKARJUNA VENKATA MALLIKARJUNA, Sanjeevi Reddy, 560048 Bengaluru (IN)
(74) Representative: Marks & Clerk LLP

(57) **Abstract**

A method for enhancing a relaxed mode in a user equipment (UE), and a UE configured to perform the method, the method comprising: entering, based on a satisfaction of a relaxed measurement criteria for a predefined first time period provided by a network, a relaxed mode while operating in an idle mode; determining an occurrence of an event for establishing communication; entering, based on the occurrence of an event for establishing communication, a connected mode from the idle mode; while the UE remains in the connected mode, continuing to monitor for the satisfaction of the relaxed measurement criteria based on a relaxed measurement configuration provided by the network when the UE was in the idle mode; and re-entering the relaxed mode, after transitioning from the connected mode to the idle mode, at an expiry of a predefined second time period, provided by the UE, based on a result of the monitoring and the satisfaction of the relaxed measurement criteria

## Description

### Technical Field

This disclosure relates generally to a wireless communication system, and more specifically, to a method to enhance a relaxed measurement in the wireless communication system.

### Discussion of Related Art

The third generation partnership project (3GPP) has introduced a new feature for idle mode in Long Term Evolution (LTE) and New Radio (NR) from Release 16, known as "relaxed measurements". This feature aims to prompt a user equipment (UE) to relax its measurement cycles when it is identified to be in a state of low mobility. This helps to save power otherwise consumed by the UE. Further, before transitioning into a relaxed mode, the UE needs to fulfill the low mobility relaxed criteria for a specified duration called 'TsearchDeltaP' time as defined in Release 16. The TsearchDeltaP time is provided by a network. The TsearchDeltaP time may be alternately referred to as a predefined first time period throughout this disclosure. Thus, the UE that has satisfied the relaxed measurement criteria for the predefined first time period enters a relaxed mode while operating in an idle mode. Table 1 shows the relaxed measurement criteria for entering into the relaxed mode for the idle mode scenario.

**Table 1**

| | | | Relaxed measurement criterion for UE with low mobility | |
|---|---|---|---|---|
| | The relaxed measurement criterion for UE with low mobility is fulfilled when: | | | |
| | | - (Srxlev_{Ref} - Srxlev) < S_{SearchDeltaP}, | | |
| | Where: | | | |
| | | - Srxlev = current Srxlev value of the serving cell (dB). | | |
| | | - Srxlev_{Ref} = reference Srxlev value of the serving cell (dB), set as follows: | | |
| | | | - After selecting or reselecting a new cell, or | |
| | | | - If (Srxlev - Srxlev_{Ref}) > 0, or | |
| | | | - If the relaxed measurement criterion has not been met for T_{SearchDeltaP}: | |
| | | | | - The UE shall set the value of Srxlev_{Ref} to the current Srxlev value of the serving cell. |

In Table 1, SrxlevRef is a reference value for received signal power level; Srxlev is receive signal power level of the serving cell; and SSearchDeltaP is a constant for judging a low mobility state (which is a determined state when the difference between SrxlevRef and Srxlev is relatively small). For example, SrexlevRef can be set to the value of Srxlev after a new cell is selected, so that a low mobility state can be newly determined in relation to the received signal power level at the time that communication with the new cell started.

Further, after the UE has satisfied relaxed measurement criteria and entered the relaxed mode, while in the idle mode, the UE can move to a connected mode based on a user request for establishing the connection for a call or data. Further, after a short or long duration, if the UE returns to the idle mode, in such a scenario the UE needs to perform the relaxed criteria satisfaction again, even though the UE might remain in the same location. Thus, such a technique impacts power consumption.

When the UE is in the relaxed mode, the UE performs the relaxed measurements based on a measurement periodicity in a relaxed manner (as defined in the 3GPP specification). However, if the UE has camped on a cell that does not support multimedia broadcast service (MBS) and when the user requests an MBS session, there will be a delay in moving to another cell that supports MBS, which creates a delay in activating the user request for the MBS. This delay may be longer when the UE is in the relaxed mode at the time the user makes the request.

In a dual SIM scenario, when the Subscriber Identity Modules (SIMs) are camped on different respective Public Land mobile networks (PLMNs), even though one SIM has already entered relaxed mode, the other SIM performs the relaxed measurement criteria independently, which has an impact on power consumption.

Based on the above-discussed problems, the following issues can be gathered.
- There is a delay in entering the relaxed mode during state transitions (from connected mode to idle mode).
- There is a delay in entering relaxed mode in the multi-SIM UE scenarios.
- There is a challenge in deciding when to exit the relaxed mode to prioritize specific services like MBS.

Thus, a need exists for a solution to each of the above-discussed problems.

### SUMMARY

According to an embodiment, a method for enhancing a relaxed mode in a user equipment (UE) is disclosed. The method includes entering, based on a satisfaction of a relaxed measurement criteria for a predefined first time period provided by a network, a relaxed mode while operating in an idle mode. Further, the method includes determining an occurrence of an event for establishing communication and entering, based on the occurrence of an event for establishing communication, a connected mode from the idle mode. While the UE remains in the connected mode, the method includes continuing to monitor for the satisfaction of the relaxed measurement criteria based on the relaxed measurement configuration provided by the network when the UE was in the idle mode. Further, the method includes re-entering the relaxed mode, after transitioning from the connected mode to the idle mode, at an expiry of a predefined second time period, provided by the UE, based on a result of the monitoring and the satisfaction of the relaxed measurement criteria.

According to a further embodiment, a UE for implementing a relaxed mode is disclosed. The UE includes one or more processors configured to enter, based on the satisfaction of a relaxed measurement criteria for a predefined first time period provided by a network, a relaxed mode while operating in an idle mode. Further, the one or more processors are configured to determine an occurrence of an event for establishing communication to enter, based on the occurrence of an event for establishing communication, a connected mode from the idle mode. While the UE remains in the connected mode, the one or more processors are further configured to continue to monitor for the satisfaction of the relaxed measurement criteria based on the relaxed measurement configuration provided by the network when the UE was in the idle mode. Further, the one or more processors are configured to re-enter the relaxed mode, after transitioning from the connected mode to the idle mode, at an expiry of a predefined second time period, provided by the UE, based on a result of the monitoring and the satisfaction of the relaxed measurement criteria.

At least some of the above and other features of the invention are set out in the claims.

### BRIEF DESCRIPTION OF THE DRAWINGS

These and other features, aspects, and advantages of the inventive concepts will become better understood when the following detailed description is read with reference to the accompanying drawings in which like characters represent like parts throughout the drawings, wherein:
FIG. 1 illustrates an example environment of a wireless communication system, according to an embodiment of present disclosure;
FIG. 2 illustrates a problem scenario where the UE's behavior is undefined when the UE moves from the idle mode to the connected mode;
FIG. 3 illustrates a flow chart for a method implemented in the UE for optimizing the relaxed mode, according to an embodiment of the present disclosure;
FIG. 4 illustrates an example embodiment of re-entering to the relaxed mode in a case when UE remains in the same cell, according to an embodiment of the present disclosure;
FIG. 5 illustrates an example embodiment of entering to the relaxed mode in a case when UE is in idle mode and satisfies relaxed measurement criteria for low mobility evaluation but the TsearchDeltaP timer has not yet expired, according to an embodiment of the present disclosure;
FIG. 6 illustrates an example embodiment of entering the relaxed mode based on communication-related parameters measured/obtained during the idle mode, according to an embodiment of the present disclosure.
FIG. 7 illustrates a problem scenario where MBS starts on target inter-frequency exit before entering the relaxed mode;
FIG. 8 illustrates a solution to avoid relaxed measurement scheduling on MBS target frequency, according to an embodiment of the present disclosure;
FIG. 9 illustrates a problem scenario in a dual SIM scenario;
FIG. 10 illustrates a sequence flow for sharing the relaxed measurement information in a dual SIM scenario; and
FIG. 11 is a diagram illustrating a user equipment (UE) in a wireless network, according to a present embodiment.

Skilled artisans will appreciate that the flow charts illustrate the method in terms of the most prominent operations involved to help to improve understanding of aspects of the present inventive concept. Furthermore, in terms of the construction of the device, one or more components of the device may have been represented in the drawings by conventional symbols, and the drawings may show only those specific details that are pertinent to understanding the embodiments of the present inventive concept so as not to obscure the drawings with details that will be readily apparent to those of ordinary skill in the art having the benefit of the description herein.

### DETAILED DESCRIPTION

It should be understood at the outset that although illustrative implementations of the embodiments of the present disclosure are illustrated below, the present inventive concepts may be implemented using any number of techniques, whether currently known or in existence. The present disclosure should in no way be limited to the illustrative implementations, drawings, and techniques illustrated below, including the example design and implementation illustrated and described herein, but may be modified within the scope of the appended claims along with their full scope of equivalents.

The term "some" as used herein is defined as "one, or more than one, or all." Accordingly, the terms "one," "more than one," "more than one, but not all" or "all" would all fall under the definition of "some." The term "some embodiments" may refer to one embodiment or to several embodiments or to all embodiments. Accordingly, the term "some embodiments" is defined as meaning "one embodiment, or more than one embodiment, or all embodiments."

The terminology and structure employed herein are for describing, teaching, and illuminating some embodiments and their specific features and elements and do not limit, restrict, or reduce the scope of the claims or their equivalents.

Whether or not a certain feature or element was limited to being used only once, either way, it may still be referred to as "one or more features", "one or more elements", "at least one feature", or "at least one element." Furthermore, the use of the terms "one or more", and "at least one" feature or element does not preclude there being none of that feature or element unless otherwise specified by limiting language such as "there needs to be one or more . . ." or "one or more element is required."

Herein, the term "criteria" means one or more criterion.

Herein, the term "communication" is used to mean any transmission of a signal from a first entity to a second entity. A communication can be unidirectional or bidirectional and can be a signal exchange in a connected mode or a camped (idle) mode.

Unless otherwise defined, all terms, and especially any technical and/or scientific terms, used herein may be taken to have the same meaning as commonly understood by one having ordinary skill in the art.

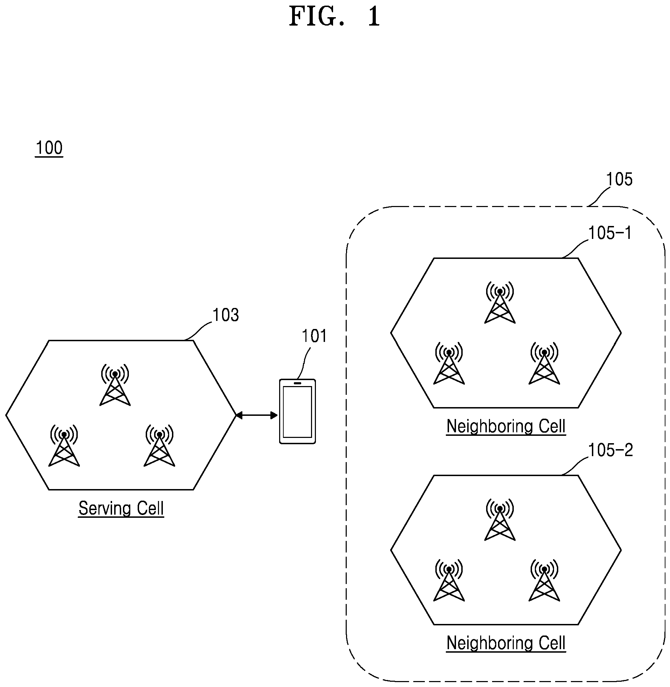

FIGS. 1 through 10, discussed below, and the various embodiments used to describe the principles of the present disclosure are by way of illustration only and should not be construed in any way to limit the scope of the disclosure. Those skilled in the art will understand that the principles of the present disclosure may be implemented in any suitably arranged system or device.

For the convenience of explanation, the disclosure will hereinafter use terms and definitions defined by the third generation partnership project (3GPP), long-term evolution (LTE), 5G, and 6G standards. The disclosure is not, however, limited to the terms and definitions, and may equally apply to any systems that conform to other standards.

The various terminologies that are used throughout the disclosure are defined as below:

The terminology 'UE Enters Relaxed Mode' in the context of the low mobility case, signifies that the low mobility criteria are satisfied for the TsearchDeltaP time. Further, the 'UE Enters Relaxed Mode' also means that the measurements are being performed as per the relaxation according to the 3GPP specification.

Further, the terminology 'UE Satisfies Relaxation criteria for Low Mobility case' denotes that Criteria (SrxlevRef-Srxlev)<SsearchDeltaP, but the TsearchDeltaP time has not still expired as defined in 3GPP specification.

The terminology 'first predefined time period' denotes the TsearchDeltaP time provided by the network.

The terminology 'second predefined time period' denotes a time period provided by the UE.

'Idle mode' is a term that refers to the state of the UE when it is connected to the network but is not actively transmitting or receiving data. When a device is in idle mode, it is essentially on standby, ready to receive incoming calls, messages, or data, but not actively engaged in any data exchange. This allows the device to conserve power while remaining accessible on the network. Idle mode allows for efficient use of network resources and enables the UE to manage its power consumption effectively.

'Relaxed mode' is a term used to describe a feature that allows the UE to conserve power when it is not actively transmitting or receiving data. In relaxed mode, the device may "relax", performing measurements by increasing the measurement periodicity. This can help extend battery life in the UE since the number of measurements performed is less. The UE can enter the relaxed mode while in the Idle mode.

The term "relaxed measurement configuration" provides SsearchDeltaP and TsearchDeltaP parameters. The SsearchDeltaP and TsearchDeltaP parameters are parameters pertaining to the settings used for network measurements in the UE and the like. These network measurements can include factors like signal strength, interference levels, and the like.

The term "connected mode" refers to the state of the UE when it is actively transmitting or receiving data. In connected mode, the UE is fully engaged in communication with the network, exchanging data, voice calls, or other types of information.

The present disclosure discloses a system and a method implemented in the UE for optimizing the relaxed mode in the UE. According to an embodiment, the UE uses idle relaxation status before the UE enters the connected mode, and returns to idle relaxation status when moving back to the idle mode. Thereby, the UE enters the relaxed mode faster. According to some embodiments, the relaxation status is shared between multiple SIMs in the UE, enabling all of the SIMs (which are configured with relaxed measurements) to enter the relaxed mode faster. A further embodiment is applicable to a scenario in which the UE is in the relaxed mode and the user has requested an MBS service which is not supported by a current serving cell, but the same service is supported by inter-frequency cells (cells using a different frequency band than the current serving cell). In this case, the UE will exit from the relaxed mode based on inter-frequency measurements, and the UE can reselect those cells (that support the same service) faster.

FIG. 1 illustrates an example environment of a wireless communication system, according to an embodiment. The example environment depicts the wireless communication system 100 where the UE 101 is connected to a serving cell 103 and is surrounded by multiple neighboring cells 105-1, 105-2. The multiple neighboring cells 105-1, and 105-2 may be collectively referred to as neighboring cells 105 throughout the disclosure. Further, for the sake of brevity, two neighboring cells are depicted, however, there can be three or more neighboring cells. The UE 101 may continuously interact with the serving cell 103 and the neighboring cells 105 to maintain the quality and continuity of the connection. Further, the UE 101 may perform a state transition from the idle mode to the relaxed mode or from the idle mode to the connected mode based on the usage of the UE by the associated user. According to an embodiment, the disclosed techniques efficiently enable the UE 101 to transition to the relaxed mode faster when the UE 101 frequently moves back and forth between the idle mode and the connected mode. A detailed operation of optimizing the process associated with the state transitions during the relaxed mode will be explained in the forthcoming paragraphs.

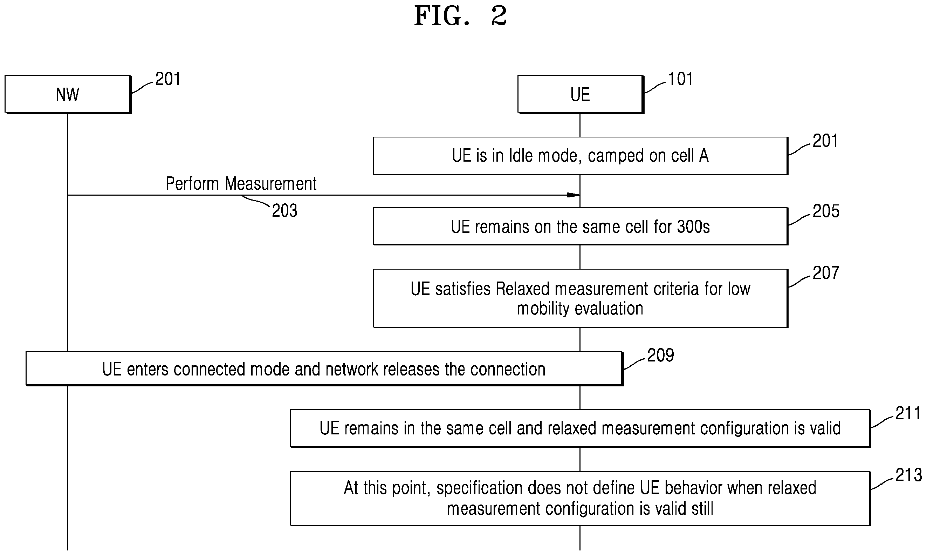

FIG. 2 illustrates a problem scenario in the prior art, where the UE's behavior is undefined when the UE moves from the idle mode to the connected mode. In the example scenario, UE 101 is connected to a network 201 (the UE is in connected mode). At step 201 the UE 101 has transitioned to in idle mode and is camped on cell A of the network 201. Accordingly, as a general process at step 203, the UE 101 performs measurements while in the idle mode to check whether the UE 101 is satisfying the relaxed measurement criteria. As defined in the Rel 16, the UE 101, at step 205 performs the measurement for the TsearchDeltaP time period (while remaining on the same cell). The TsearchDeltaP as per Rel 16 specifications is up to 300s. However, this can vary in accordance with the developments of the 3GPP standards. Further, at step 207, the UE 101 satisfies the relaxed measurement criteria for low mobility evaluation, and transitions to relaxed mode.

In the example scenario, due to a UE 101 request for service or opening of any App requiring a network connection by the user of the UE 101, the UE 101, at step 209, enters the connected mode and the network releases the connection (in five seconds). Thus, the UE 101 moves to the connected mode now. Further, after some time the UE 101 returns to the idle mode from the connected mode. Accordingly, as per the procedure defined in the 3GPP specification, the UE cannot perform the relaxed measurement until it satisfies the relaxed measurement criteria. Further, the UE 101 will perform the relaxed measurement again for the TsearchDeltaP time even if the UE 101 remains in the same cell (step 211). Further, the UE 101 performs the measurement (to determine whether the relaxed measurement criteria is satisfied) normally instead of the relaxed manner (as when operating in the relaxed mode). At this point, at step 213, the 3GPP specification does not define the UE behavior when the relaxed measurement configuration is still valid. Such scenarios create an additional burden on the UE while consuming more power.

According to an embodiment, to overcome the above issues, a timer of a predefined second time period is provided by the UE 101. According to an embodiment, the predefined second time period is smaller than the predefined first time period. In an embodiment, the UE 101 continues to monitor the relaxed measurement criteria while the UE 101 remains in the connected mode. Now, if the relaxed measurement criteria are satisfied while the UE 101 remains in the connected mode, when the UE 101 exits from the connected mode and enters the idle mode, the UE 101 then re-enters the relaxed mode at an expiry of the predefined second time period as the relaxed measurement criteria are still satisfied. (The predefined second time period may start at or at around a time point of transitioning from the connected mode to the idle mode.) This facilitates entering the relaxed mode earlier rather than waiting for the predefined first time period.

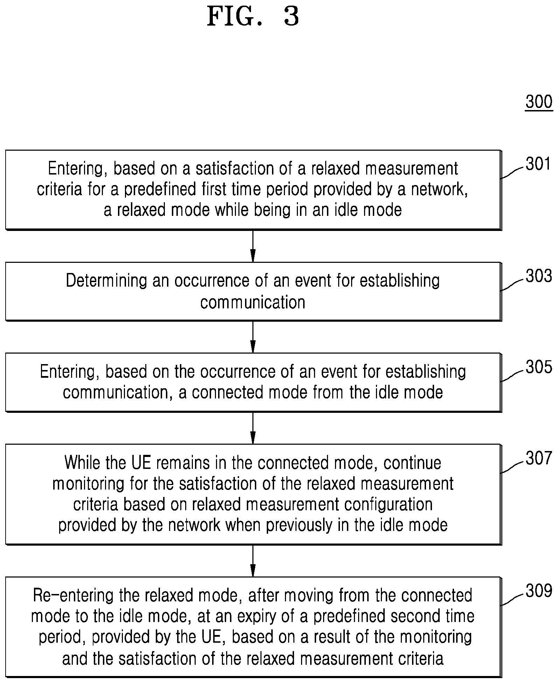

FIG. 3 illustrates a flow chart for a method implemented in the UE for optimizing the relaxed mode, according to an embodiment of the present disclosure. Method 300 as depicted in FIG. 3 is implemented in the UE 101. In an embodiment, it is considered that the UE 101 has satisfied the relaxed measurement criteria while operating in the idle mode. Accordingly, at operation 301, the UE 101 enters the relaxed mode while in the idle mode based on the satisfaction of the relaxed measurement criteria. Further, during the relaxed mode, the UE 101 at operation 303, determines an occurrence of an event for establishing connected-mode communication. For instance, the UE 101, during the relaxed mode the UE 101 checks regularly for any occurrence of the event for the establishment of connected-mode communication. In a non-limiting example, the event may be an incoming/outgoing call, a network activity, scheduled tasks, user interaction with the UE 101 requiring network communication, system events, and the like. Thus, during the occurrence of any such events, the UE 101 comes out of the relaxed mode (because the relaxed mode is defined as a mode that occurs in the idle mode) and enters into the connected mode. Accordingly, at operation 305, based on the occurrence of an event for establishing connected-mode communication, the UE 101 enters the connected mode from the idle mode. Further, at operation 307, the UE 101, while remaining in the connected mode, continues monitoring for the satisfaction of the relaxed measurement criteria based on a relaxed measurement configuration provided by the network when previously in the idle mode. The relaxed measurement configuration (which is an example of, and may be referred to as, a network configuration throughout the disclosure) may correspond to the system information block (SIB) parameters of the 3GPP specification. In a non-limiting example, the SIB parameters may include cell identity information, frequency information, band information, cell access parameters, mobility control parameters, scheduling information, and the like. In an embodiment, when there is a change from the connected mode to idle mode and while the UE satisfies the relaxed measurement criteria, at a point in time when the UE leaves the connected mode, a timer having the predefined second time period starts.

Further, if the UE 101 determines that the relaxed measurement criteria is/are satisfied and the relaxed measurement configurations are valid, then at operation 309, the UE 101 re-enters the relaxed mode at the expiry of the predefined second time period after transitioning from the connected mode to the idle mode. The forthcoming paragraphs illustrate various embodiments of method 300.

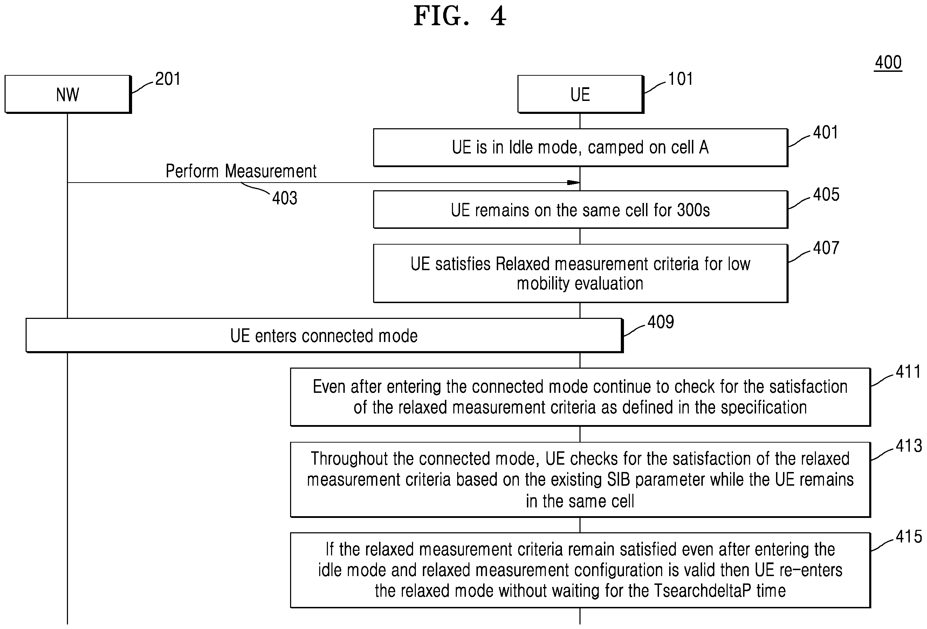

**FIG.** 4 illustrates an example embodiment of re-entering to the relaxed mode in a case when UE remains in the same cell, according to an embodiment of the present disclosure. FIG. 4 will be explained by referring to FIG. 3. At operation 401 the UE 101 is in idle mode based on the satisfaction of the relaxed measurement criteria. Further, the UE 101 is camped on cell A (i.e. the serving cell) of the network 201. Accordingly, as a general process at operation 403, the UE 101 performs measurements while operating in the idle mode to check whether the UE 101 is satisfying the relaxed measurement criteria. These measurements may include signal strength measurements, e.g., received signal receive power (RSRP), and/or signal quality measurements, e.g., signal to noise ratio (SNR) or signal to interference and noise ratio (SINR). As defined in the Rel 16, the UE 101, at operation 405 performs the measurement for the TsearchDeltaP time. The TsearchDeltaP as per Rel 16 specifications is up to 300s. However, this can vary in accordance with the developments of the 3GPP standards. Further, consider that at operation 407, the UE 101 satisfies the relaxed measurement criteria for low mobility evaluation. The operation 407 is the same as operation 301. In the example scenario consider that due to the occurrence of the event for establishing connected-mode communication such as a UE request for service or opening of any App (that exchanges signals with a network) by the user of the UE 101, the UE 101, at operation 409, enters the connected mode from the idle mode. (Once the connected mode communication is completed, the network may release the connection in 5s after operation 413 discussed below). Operation 409 corresponds to 303 and 305. Thus, the UE 101 moves to the connected mode now. Further, at operations 411 and 413, the UE 101 even after entering the connected mode may continue to monitor for the satisfaction of the relaxed measurement criteria (e.g., in accordance with the procedure defined in the 3GPP specification, release 16). In an embodiment, the UE 101 continues to perform this monitoring while the UE 101 remains in the same cell (i.e. the serving cell). In particular, throughout the connected mode, the UE 101 checks whether the relaxed measurement criteria is satisfied based on existing SIB parameters (already received from the network by UE 101) while the UE 101 remains in the same cell. Further, at operation 415, if the relaxed measurement criteria remain satisfied even after entering the idle mode and the relaxed measurement configuration is valid, then the UE 101 re-enters the relaxed mode without waiting for the TsearchdeltaP time at the predefined second time period provided by the UE 101. The operations 411 through 415 correspond to operations 307 and 309. Accordingly, as the UE 101 remains in the same cell and the relaxed measurement criteria and the relaxed measurement configuration are valid, the UE 101 avoids waiting till the first predefined time period expires and moves to the relaxed mode early. By moving to the relaxed mode sooner, power consumption by the UE 101 is reduced.

According to an embodiment, while the UE 101 remains in the connected mode and the relaxed measurement criteria are not satisfied, then, after a transition to the idle mode, the UE 101 may not assume that the relaxed mode will be satisfied. In this case, the UE 101 may re-start monitoring for the satisfaction of the relaxed measurement criteria for the predefined first time period, while the serving cell remains unchanged.

According to an embodiment, while the UE 101 is in the idle mode, the UE 101 "monitors for the satisfaction of the relaxed measurement criteria for the predefined first time period". In other words, the UE 101 performs measurements, from the time the predefined first time period starts, to determine if the relaxed measurement criteria is preliminarily satisfied, and continues to perform these measurements until the expiry of the predefined first time period. (At the end of the predefined first time period, the relaxed measurement criteria may be considered satisfied, whereby the UE 101 normally enters the relaxed mode.) Further, the UE 101 enters, after the expiry of the predefined first time period and the satisfaction of the relaxed measurement criteria, the relaxed mode while operating in the idle mode based on the monitoring.

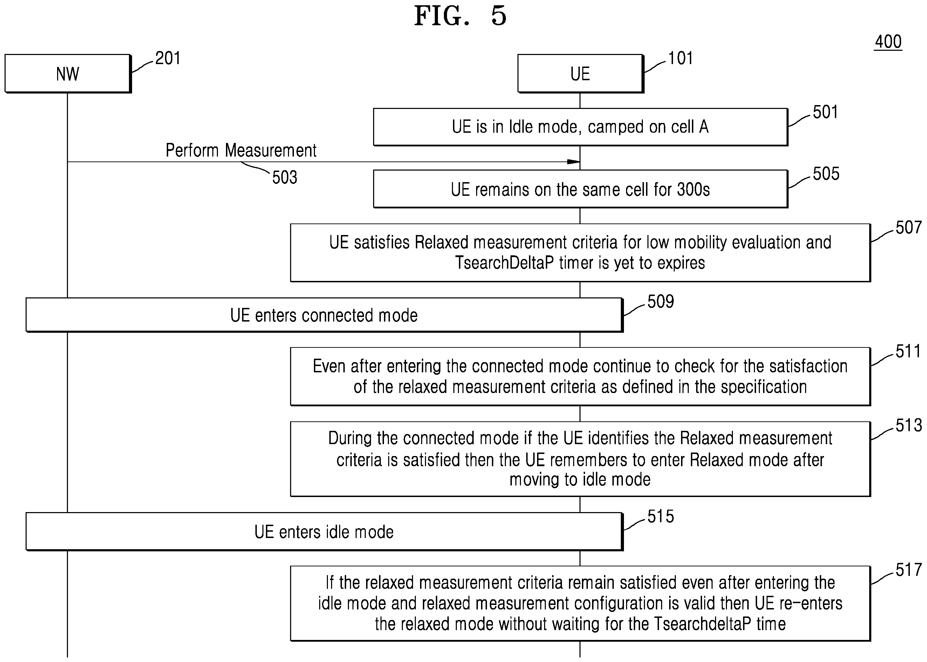

FIG. 5 illustrates an example embodiment of entering to the relaxed mode in a case when UE is in idle mode and satisfies relaxed measurement criteria for low mobility evaluation, but the TsearchDeltaP timer has not yet expired, according to an embodiment of the present disclosure. FIG. 5 will be explained by referring to FIG. 4.

In an embodiment, operations 501, 503, and 505 correspond to operations 401, 403, and 405 and are the same therefore the sake of brevity the description of the same is omitted here and can be referred to through the description of the operations 401, 403, and 405 of FIG. 4.

In an embodiment, at operation 507, UE 101 determines whether relaxed measurement criteria are satisfied and the predefined first time period is still not expired based on the monitoring. Accordingly, consider that UE 101 satisfies the relaxed measurement criteria, however, the predefined first time period (i.e. TsearchDeltaP timer) has still not expired. Further. Consider that there is an occurrence of the event for establishing communication, then the UE 101, at operation 509, enters the connected mode from the idle mode based on the occurrence of the event for establishing the communication, the relaxed measurement criteria is satisfied and the predefined first time period has still not expired. Further, at operation 511, even after entering the connected mode, the UE 101 continues to check the satisfaction of the relaxed measurement criteria as defined in the 3GPP specification. The operation 511 corresponds to 411 of FIG. 4. Further at operation 511, while the UE 101 remains in the connected mode, the UE 101 continue to monitor the satisfaction of the relaxed measurement criteria and the expiry of the predefined first time period based on the relaxed measurement configuration provided by the network in the idle mode. Further, at operation 513, the UE 101 determines the expiry of the predefined first time period while the UE 101 remains in the connected mode based on the monitoring. Further, the UE 101 remembers to enter Relaxed mode after moving to idle mode. In particular, the UE 101 stores information indicating a status of entering in the relaxed mode based on the determination of the expiry of the predefined first time period while the UE remains in the connected mode. Further, the UE 101 continues to monitor the relaxed measurement criteria until the connection is released. Thus, at operation 515, the UE 101 enters the idle mode from the connected mode while the relaxed measurement criteria are still satisfied and the connection is released.

At operation 517, while the UE 101 is in the idle mode, the UE 101 continues to monitor the satisfaction of the relaxed measurement criteria for the predefined second time period provided by the UE 101 based on the stored information. Further, the UE 101 enters the relaxed mode from the idle mode based on the stored information and the satisfaction of the relaxed measurement criteria at the expiry of the predefined second time period. Thus, without waiting for the expiry of the first time period, the UE enters the relaxed mode.

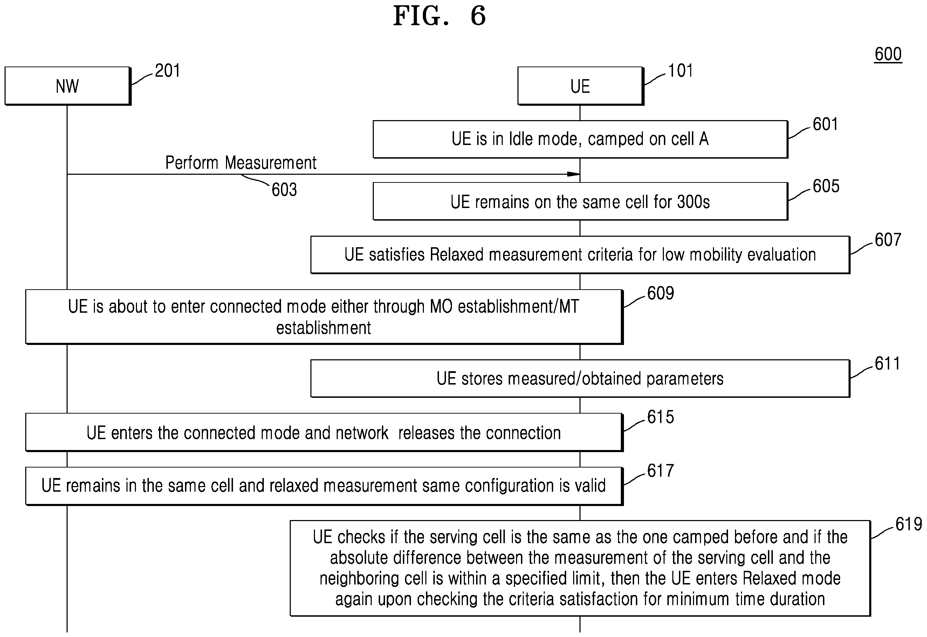

**FIG.** 6 illustrates an example embodiment of entering the relaxed mode based on communication-related parameters measured/obtained during the idle mode, according to an embodiment of the present disclosure. FIG. 6 will be explained by referring to FIG. 4.

In an embodiment, operations 601, 603, 605, and 607 of method 600 are the same as operations 401, 403, 405, and 407, respectively; therefore for the sake of brevity the description of the same is omitted here and can be referred to through the description of the operations 401, 403, 405, 407 of FIG. 4.

According to an embodiment, at operation 609, the UE 101 is about to enter the connected mode due to the occurrence of the event establishment of the communication as discussed in above-mentioned paragraphs. This may be a mobile originated (MO) connection establishment or a mobile terminated (MT) connection establishment. In an embodiment, the UE 101 continues to measure/obtain a first plurality of communication-related parameters. The measured parameters may be signal strength (e.g., RSRP) and/or signal quality (e.g., SNR or SINR) parameters. The obtained parameters may be serving cell ID and ARFCN, discussed below. The UE 101, at operation 611, stores the measured/obtained first plurality of parameters in memory.

At operation 615, the UE 101 enters the connected mode, and, after the relevant communication is completed, the network releases the connection (e.g., in 5s). Further, operations similar to operations 411 and 413 are performed. Hence, at operation 617, the UE 101 remains in the same cell and the same relaxed measurement configuration is valid while being in the connected mode. Thus, as per the operations disclosed in method 400, the UE 101 enters the idle mode from the connected mode. Further, the UE 101 may determine, while in the idle mode, that the relaxed mode should be initiated, based on the relaxed measurement criteria monitoring that occurred during the connected mode (in which the relaxed measurement criteria continued to be satisfied). Further, at operation 619, the UE 101 may measure / obtain a second plurality of parameters at the instance when the UE re-enters the idle mode, where the second plurality of parameters may be the same as the first plurality of parameters. Then the UE 101 compares each of the first plurality of measured parameters with respect to a corresponding one of the second plurality of measured parameters, and determines a difference for each comparison. The UE 101 may determine whether the difference is within a predetermined threshold value. The UE 101 may re-enter the relaxed mode at or before the expiry of the predefined second time period when the difference is within the predetermined threshold value.

In an embodiment, each of the obtained first plurality of parameters and the second plurality of parameters may include a cell identification (ID) of a serving cell, an absolute radiofrequency channel number (ARFCN), and a relaxed mode status. Each of the measured parameters may be a signal strength of the serving cell (e.g., RSRP), a signal strength of the neighboring cells, or a signal quality parameter (e.g., SNR or SINR) of the serving cell / neighboring cells.

According to method 600, before entering the connected mode, the UE 101 stores the previous values or again obtains the serving cell ID, ARFCN, and relaxed mode status, and stores the previous measurements or re-takes and then stores measurements of the serving and neighboring cells. Once the UE 101 goes to the connected mode and comes back to the idle mode, then the UE reuses the stored information with newly obtained / measured information, and compares the serving cell ID, ARFCN, the serving cells, and the neighboring cells' measurements with those previously stored. If serving cell ID and ARFCN are unchanged, then the comparison of the measurement is performed. For instance, a previously stored RSRP for the serving cell is compared to a newly measured RSRP for the serving cell, and a previously stored SINR is compared to a newly measured SINR for the serving cell. If the respective difference between the measured RSRP and SINR of the serving cell is within the given thresholds, then the UE 101 considers entering relaxed mode instead of waiting for complete TsearchDeltaP time. (For example, the relaxed mode may be entered after the relaxed measurement criteria is satisfied over the second predetermined time period.) Additional comparisons may be performed with respect at least one neighboring cell, where the results of these comparisons may be factored into the determination of whether to enter the relaxed mode.

Now, if a Multicast Broadcast Service (MBS) broadcast capable UE is receiving or interested in receiving an MBS broadcast service(s), thus the UE can receive this MBS broadcast service(s) by camping on a frequency on which it is provided. The UE may consider that frequency to be the highest priority during the MBS broadcast session (specified in TS 38.300). Further, when the serving cell cannot provide the interested MBS service, the UE identifies the target frequency for receiving its interested MBS service is through SIB21 Information of the Serving Cell. In SIB21 information of the serving cell, one or more MBS Frequency Selection Area Identities (MBS FSAI(s)) of the neighbor frequencies are indicated and the same MBS FSAI(s) is also indicated for this MBS broadcast service in MBS User Service Description (USD). Further, when the UE identifies that there is some neighbor frequency that can support its interested service, the UE has to treat that frequency with the highest priority and try to reselect for starting an MBS session. Before increasing the priority, the target frequency measurements availability depends on the serving cell, the target frequency SIB reselection priorities, and the serving cell signal conditions. The reason is that, as per the 3GPP specification, inter-frequency measurement scheduling is based on reselection priorities and the serving cell signal conditions as per existing arts.

Further, an issue that arises in such a situation is that if the UE has not started the target inter-frequency measurements before it wants to start the MBS session, then it can delay the cell reselection to target frequency as the UE has to perform the cell detection and at least for two measurements for evaluating the reselection to target frequency/cell. Furthermore, if the UE has already entered relaxed measurement mode when it has to reselect to inter-frequency for starting the MBS session, it will add additional delay in completing the required search and measurements for reselection evaluation on target frequency/cells as relaxed measurements increase the measurement scheduling intervals.

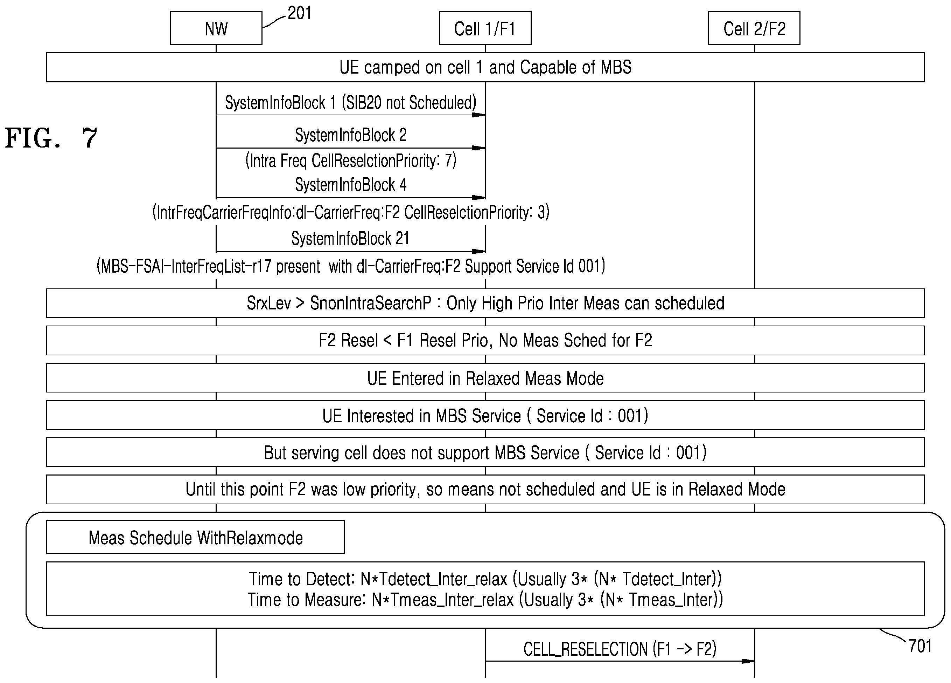

**FIG.** 7 illustrates a problem scenario where MBS starts on target inter-frequency consideration before entering the relaxed mode. As can be seen from FIG. 7 the target Inter frequency was configured through SIB4 as low priority frequency before the UE entered relaxed mode and wants to start the MBS Session. Further, the Serving Cell SrxLev > SnonIntraSearchP AND Squal > SnonIntraSearchQ. In the above scenario, the target inter-frequency would not have measurement results available when the UE wants to start the MBS Session. Thus, the UE has to schedule search and measurements freshly when it has chosen this low-priority frequency as the target for the MBS session start. Further, if the UE follows relaxed measurement scheduling in accordance with a normal procedure, it will delay in completing the minimum required measurements for the cell reselection evaluation. The same is evident from the step 701. As can be seen the periodicity for the relaxed measurement scheduling is three times i.e. 3* (N* Tdetect_Inter) or 3* (N* Tmeas_Inter)).

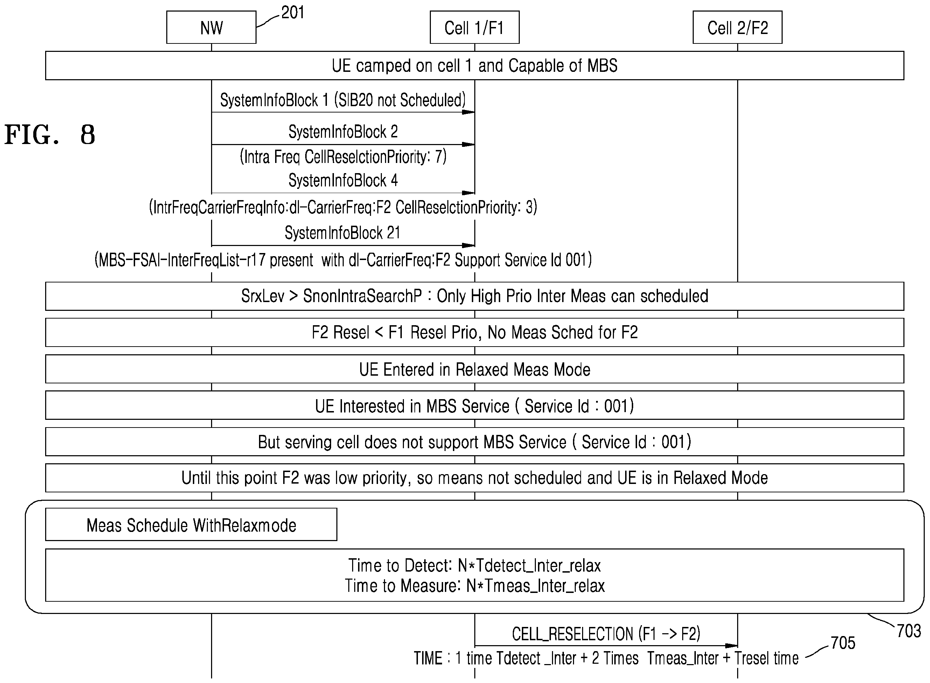

According to an embodiment, a solution provided for the above-mentioned scenario, as illustrated in FIG. 8, is to avoid relaxed measurement scheduling on the MBS target frequency. In an embodiment, when the UE is interested in an MBS service and finds that the serving cell does not support this service and some other inter-frequencies (e.g., frequencies in bands different from that currently being used for communication) (or a single frequency) listed by the network can support the interested MBS session, then even though the UE is already in the relaxed measurement scheduling mode, the UE does not apply the relaxed measurement scheduling for those frequencies. Instead, the UE schedules the measurement of target frequencies for the MBS service using normal measurement scheduling cycles until the MBS session is active. Furthermore, when the MBS session is deactivated, the UE reverts the reselection priorities of these frequencies to the SIB reselection priorities and the UE can resume relaxed measurements scheduling on these frequencies as well if the UE is still in the relaxed mode. Accordingly, by not applying the relaxed measurement as per normal procedure at steps 703 and 705, the UE can perform target cell reselection to an inter-frequency efficiently for performing MBS session.

In an embodiment, when UE 101 is in relaxed mode it first obtains a list of the neighboring cells 105 from the network that are capable of supporting a plurality of services. The UE 101 compares the capability of a serving cell 103 with the capability of each of neighboring cell 105 in the list of the neighboring cells 105 for providing the plurality of services. Further, the UE 101 determines a neighboring cell, from the list of neighboring cells, that is capable of supporting the plurality of services better than the serving cell. Further, the UE 101 schedules a measurement of the determined neighboring cell, having a frequency different from that of the serving cell 103 (used for communication with UE 101), with a shorter periodicity than a determined periodicity associated with the relaxed mode.

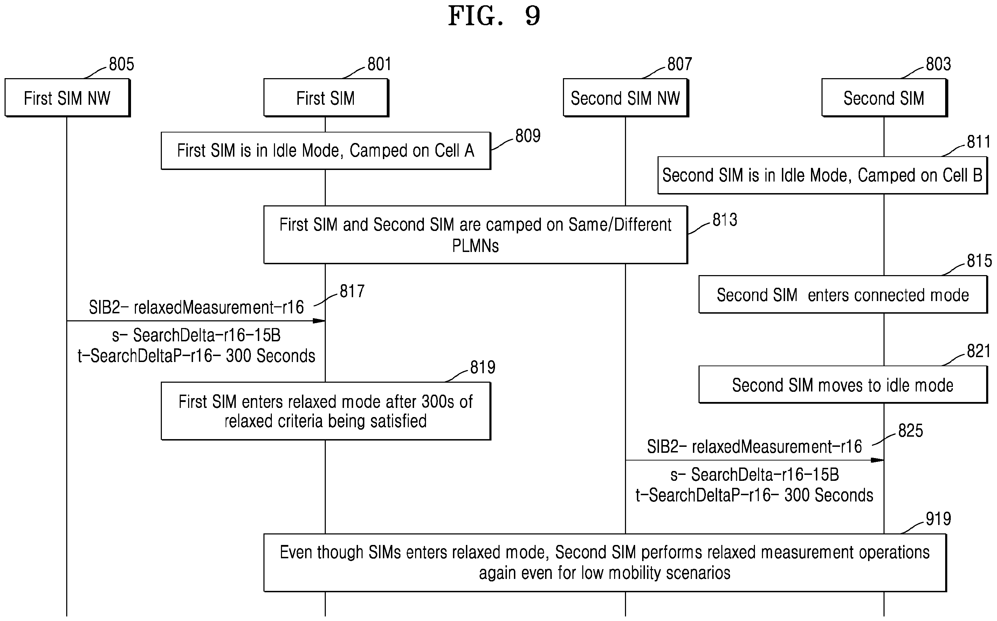

**FIG.** 9 illustrates a problem scenario in a dual SIM scenario (a mobile terminal has at least first and second SIMs). FIG. 9 depicts the dual SIM scenario where a SIM1 801 (i.e. first SIM) is served by a first network (NW) 805 ("First SIM NW) and a SIM2 807 (i.e. second SIM) is served by a NW 803 ("Second SIM N""). At operations 809 and 811 the SIM1 801 is in idle mode and camped on cell A and SIM2 807 also is in the idle mode and camped on cell B. Further, SIM1 801 and SIM2 803 are camped on the same or different PLMNs at operation 813. Further, at operation 817, the SIM1 801 performs the relaxed measurement, and at operation 819 the SIM1 801 enters the relaxed mode after the 300s based on the satisfaction of the relaxed measurement criteria. Further, at operation 815, the SIM2 enters connected mode, and after some time the SIM2 803 enters idle mode at operation 821. Further, at operation 825, the UE 101 performs the relaxed measurement with respect to the SIM2 and the second SIM NW 807. Thus, at block 827, it can be seen that in the Dual SIM scenario, when both SIMs are camped on same or different PLMNs, even though one SIM has already "entered relaxed" (the relaxed measurement criteria is already satisfied with respect to SIM1 801), the other SIM performs the relaxed measurement criteria independently. Further, when SIM1 801 is already in relaxed mode and SIM2 803 preliminarily meets the relaxed measurement criteria according to the configuration it has received from its NW, the SIM2 803 still continues to monitor the relaxed measurement criteria until TsearchDeltaP timer expiry.

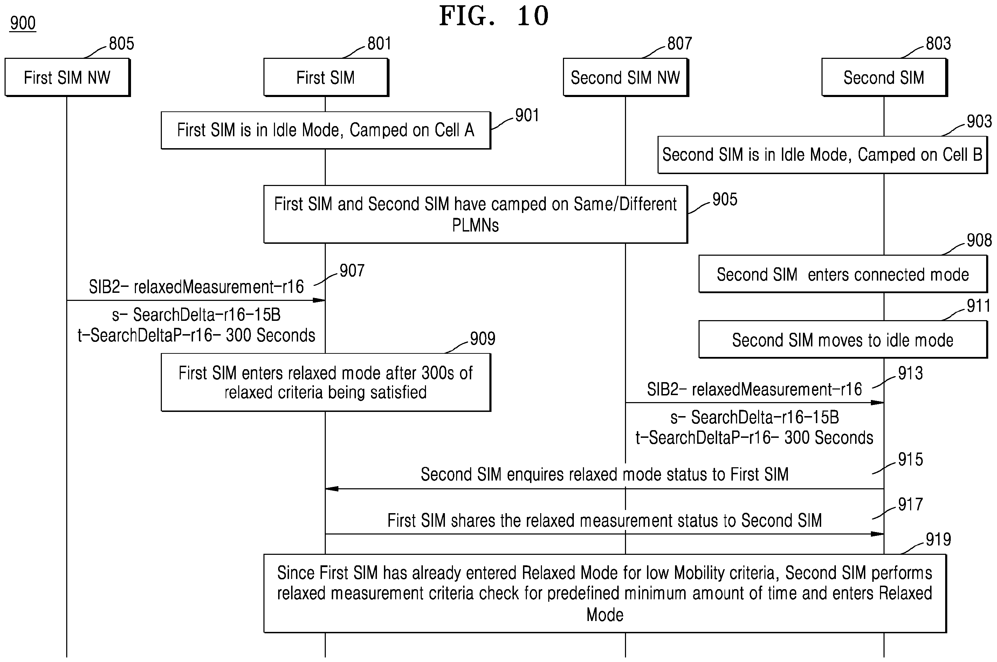

FIG. 10 illustrates a sequence flow for sharing the relaxed measurement information in a dual SIM scenario, according to an embodiment of the present disclosure. Method 900 overcomes the problem as disclosed in FIG. 9. According to an embodiment, operations 901 through 913 are the same as described for operations 809 through 825, respectively. In an embodiment, as the second SIM 803 enters the idle mode and starts monitoring for the satisfaction of the relaxed measurement criteria, at operation 915, a process involving the second SIM 803 inquires about the relaxed mode status of the first SIM 801. Thus, at operation 917, since the first SIM 803 has already entered the relaxed mode for low mobility criteria, the second SIM 803 performs the relaxed measurement criteria check for the predefined second time period and, if the criteria is satisfied at the expiry of the second time period, it enters the relaxed mode. Thus, based at least in part on the relaxed mode status of the first SIM 801, the second SIM 803 decides to enter relaxed measurement mode without waiting for TsearchDeltaP time. This helps in enabling SIM2 to enter the relaxed mode faster.

The example embodiment explains the dual SIM scenario, however, method 900 is applicable to a UE having three or more SIMs. Accordingly, the UE 101 receives, from the network, the relaxed measurement configuration by a first SIM among a plurality of SIMs, where it is considered that at least a second SIM among the plurality of SIMs is in the relaxed mode. The first SIM then monitors for the satisfaction of the relaxed measurement criteria for a predefined second time period (set by the UE 101 and shorter than the first predetermined time period). By performing the monitoring for only the second time period rather than the first predetermined time period, the first SIM enters the relaxed mode at the expiry of the predefined second time period based on the relaxed measurement mode status of the second SIM and the satisfaction of the relaxed measurement criteria of the first SIM. Further, the first SIM may report its relaxed mode status to, and/or inquire about the relaxed measurement mode status of, the rest of the SIMs when the relaxed measurement criteria of the first SIM is satisfied. In response, the rest of the SIMs share the relaxed measurement mode status with the first SIM.

The above-disclosed techniques facilitate the UE transitioning to Relaxed mode faster when the UE frequently moves back and forth between idle and connected modes in Dual SIM and Multi-SIM scenarios. Further, the disclosed solution helps in enabling the UE to obtain MBS services faster in specific scenarios.

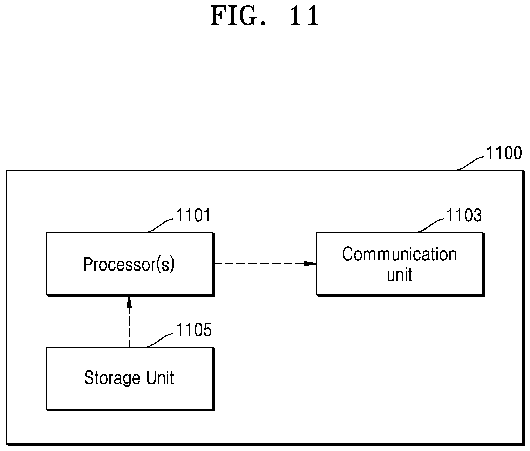

**FIG. 11** is a diagram illustrating example components of the user equipment (UE) in a wireless network, according to an embodiment of the present disclosure. The configuration of FIG. 11 may be understood as a part of the configuration of the UE 1100. Hereinafter, it is understood that terms ending in "unit" or "module" may refer to the unit for processing at least one function, operation, step, or process, as discussed herein throughout the present disclosure, and may be implemented in hardware, executing software, or a combination of hardware and executing software.

Referring to FIG. 11, the UE 1100 may include at least one processor 1101, a communication unit 1103 (e.g., communicator or communication interface), and a storage unit 1105 (e.g., storage). By way of example, the UE 1200 may be the User Equipment 101, such as a cellular phone or other device that communicates over a plurality of cellular networks (such as a 3G, 4G, 5G, or pre-5G, 6G network or any future wireless communication network). The communication unit 1103 may perform functions for transmitting and receiving signals via a wireless channel.

As an example, the processor 1101 may be a single processing unit or plural processing units, all of which could include multiple computing units. The processor 1101 may be implemented as one or more microprocessors, microcomputers, microcontrollers, digital signal processors, central processing units, state machines, logic circuits, and/or any device that manipulates signals based on operational instructions. Among other capabilities, the processor 1101 is configured to fetch and execute computer-readable instructions and data stored in the memory. The processor 1101 may be embodied as one or more processors. The one or more processors 1101 may be a general-purpose processor, such as a central processing unit (CPU), an application processor (AP), or the like, a graphics-only processing unit such as a graphics processing unit (GPU), a visual processing unit (VPU), and/or an AI-dedicated processor such as a neural processing unit (NPU). The one or more processors 1101 may control the processing of the input data in accordance with a predefined operating rule or artificial intelligence (AI) model stored in the non-volatile memory and the volatile memory, i.e., memory unit 1105. The predefined operating rule or artificial intelligence model is provided through training or learning.

The memory unit 1105 may include any non-transitory computer-readable medium known in the art including, for example, volatile memory, such as static random access memory (SRAM) and dynamic random access memory (DRAM), and/or non-volatile memory, such as read-only memory (ROM), erasable programmable ROM, flash memories, hard disks, optical disks, and magnetic tapes.

In a firmware or software configuration, the method and the communication according to the embodiments of the present disclosure may be implemented in the form of modules, procedures, functions, etc. performing the above-described functions or operations. Instructions may be stored in a memory unit and executed by a processor. The memory unit may be located at the interior or exterior of the processor and may transmit and receive data to and from the processor via various known means.

The various embodiments described above are provided by way of illustration only and should not be construed to limit the scope of the disclosure. Various modifications and changes may be made to the principles described herein without following the example embodiments and applications illustrated and described herein, and without departing from the scope of the disclosure.

The drawings and the forgoing description give examples of embodiments. Those skilled in the art will appreciate that one or more of the described elements may well be combined into a single functional element. Alternatively, certain elements may be split into multiple functional elements. Elements from one embodiment may be added to another embodiment. For example, orders of processes described herein may be changed and are not limited to the manner described herein.

Moreover, the actions of any flow diagram need not be implemented in the order shown; nor do all of the acts necessarily need to be performed. Also, those acts that are not dependent on other acts may be performed in parallel with the other acts. The scope of embodiments is by no means limited by these specific examples. Numerous variations, whether explicitly given in the specification or not, such as differences in structure, dimension, and use of material, are possible. The scope of embodiments is at least as broad as given by the following claims.

## Claims

1. A method for enhancing a relaxed mode in a user equipment (UE), the method comprising:
entering, based on a satisfaction of a relaxed measurement criteria for a predefined first time period provided by a network, a relaxed mode while operating in an idle mode;
determining an occurrence of an event for establishing communication;
entering, based on the occurrence of an event for establishing communication, a connected mode from the idle mode;
while the UE remains in the connected mode, continuing to monitor for the satisfaction of the relaxed measurement criteria based on a relaxed measurement configuration provided by the network when the UE was in the idle mode; and
re-entering the relaxed mode, after transitioning from the connected mode to the idle mode, at an expiry of a predefined second time period, provided by the UE, based on a result of the monitoring and the satisfaction of the relaxed measurement criteria.

2. The method as claimed in claim 1, wherein the relaxed measurement criteria continues to be monitored while the UE remains in the connected mode and a serving cell remains unchanged.

3. The method as claimed in claim 2, wherein:
while the UE remains in the connected mode and the relaxed measurement criteria is not satisfied, the method further comprises:
after the transitioning from the connected mode to the idle mode, re-starting the monitoring for the satisfaction of the relaxed measurement criteria for the predefined first time period while the serving cell remains unchanged.

4. The method as claimed in any preceding claim, wherein:
information related to the predefined first time period is provided by the network,
the information related to the predefined second time period is provided by the UE, and
the predefined second time period is shorter than the predefined first time period.

5. The method as claimed in any preceding claim, further comprises:
monitoring, while the UE is in the idle mode, the satisfaction of the relaxed measurement criteria for the predefined first time period and an expiry of the predefined first time period; and
entering, after the expiry of the predefined first time period and the satisfaction of the relaxed measurement criteria, the relaxed mode while being in the idle mode based on the monitoring.

6. A user equipment (UE) implementing a relaxed mode, comprising:
one or more processors configured to:
enter, based on a satisfaction of a relaxed measurement criteria for a predefined first time period provided by a network, a relaxed mode while operating in an idle mode;
determine an occurrence of an event for establishing communication;
enter, based on the occurrence of an event for establishing communication, a connected mode from the idle mode;
while the UE remains in the connected mode, continue to monitor for the satisfaction of the relaxed measurement criteria based on a relaxed measurement configuration provided by the network when the UE was in the idle mode; and
re-enter the relaxed mode, after transitioning from the connected mode to the idle mode, at an expiry of a predefined second time period, provided by the UE, based on a result of the monitoring and the satisfaction of the relaxed measurement criteria.

7. The UE as claimed in claim 6, wherein the one or more processors are further configured such that the relaxed measurement criteria continues to be monitored, while the UE remains in the connected mode and a serving cell remains unchanged.

8. The UE as claimed in claim 7, wherein:
while the UE remains in the connected mode and the relaxed measurement criteria is not satisfied, the one or more processors are further configured to:
after transitioning from the connected mode to the idle mode, re-start monitoring for the satisfaction of the relaxed measurement criteria for the predefined first time period while the serving cell remains unchanged.

9. The UE as claimed in any one of claims 6 - 8, wherein information related to the predefined first time period is provided by the network,
the information related to the predefined second time period is provided by the UE, and
the predefined second time period is shorter than the predefined first time period.

10. The UE as claimed in any one of claims 6 - 9, wherein the one or more processors are further configured to:
monitor, while the UE is in the idle mode, the satisfaction of the relaxed measurement criteria for the predefined first time period and an expiry of the predefined first time period; and
enter, after the expiry of the predefined first time period and the satisfaction of the relaxed measurement criteria, the relaxed mode while being in the idle mode based on the monitoring.

11. The UE as claimed in any one of claims 6 - 10, wherein the one or more processors are further configured to:
measure a first plurality of parameters at an instance when the UE is about to enter the connected mode from the idle mode and while the UE is in the relaxed mode;
store the first plurality of parameters;
measure a second plurality of parameters at an instance when the UE re-enters the idle mode, wherein the second plurality of parameters are each signal strength or signal quality parameters and are the same as the first plurality of parameters;
compare each of the first plurality of parameters with respect to each corresponding one of the second plurality of parameters;
determine a difference in each of the first plurality of parameters with respect to each corresponding one of the second plurality of parameters based on the comparison;
determine whether the difference is within a predetermined threshold value; and
re-enter the relaxed mode before the expiry of the predefined first time period based on the determination that the difference is within the predetermined threshold value.

12. The UE as claimed in any one of claims 6 - 10, wherein the one or more processors are further configured to:
obtain a list of neighboring cells from the network that are capable to support a plurality of services;
compare a capability of a serving cell with a capability of each of a neighboring cell in the list of neighboring cells for providing the plurality of services;
determine a neighboring cell, from the list of neighboring cells, that is capable of supporting the plurality of services better than the serving cell; and
schedule a measurement of the determined neighboring cell with a shorter periodicity than a determined periodicity associated with the relaxed mode.

13. The UE as claimed in any one of claims 6 - 10, wherein when the UE is a multi- Subscriber Identity Module (SIM) having a plurality of SIMs including at least a first SIM and a second SIM, the one or more processors are further configured to:
receive, from the network, a relaxed measurement configuration by the first SIM,
wherein the second SIM is in the relaxed mode;
monitor, by the first SIM, for the satisfaction of the relaxed measurement criteria for the predefined second time period; and
enter, by the first SIM, in the relaxed mode at the expiry of the predefined second time period based on the satisfaction of the relaxed measurement criteria of the first SIM.

14. The UE as claimed in claim 10, wherein the one or more processors are further configured to:
determine whether relaxed measurement criteria is satisfied and the predefined first time period is still not expired based on the monitoring;
enter, based on an occurrence of an event for establishing communication, the relaxed measurement criteria is satisfied and the predefined first time period is still not expired, the connected mode from the idle mode,
while the UE remains in the connected mode, continue monitor the satisfaction of the relaxed measurement criteria and the expiry of the predefined first time period based on the relaxed measurement configuration provided by the network in the idle mode; and
determine the expiry of the predefined first time period while the UE remains in the connected mode based on the monitoring;
store information indicating a status of entering in the relaxed mode based on the determination of the expiry of the predefined first time period while the UE remains in the connected mode;
continue monitor the relaxed measurement criteria until a connection is released; and
enter the idle mode from the connected mode while the relaxed measurement criteria is still satisfied and the connection is released.

15. The UE as claimed in claim 14, the wherein the one or more processors are further configured to:
monitor, based on the stored information indicating a status of entering in the relaxed mode, while the UE is in the idle mode, the satisfaction of the relaxed measurement criteria for the predefined second time period provided by the UE; and
enter the relaxed mode from the idle mode based on the stored information and the satisfaction of the relaxed measurement criteria at the expiry of the predefined second time period while the being in the idle mode.
